**Europäisches Patentamt**

**European Patent Office**

**Office européen des brevets**

(19)

(11) Veröffentlichungsnummer: **0 338 360 B1**

## (12) EUROPÄISCHE PATENTSCHRIFT

(45) Veröffentlichungstag der Patentschrift: **16.06.93**

(21) Anmeldenummer: **89106262.2**

(22) Anmeldetag: **08.04.89**

(51) Int. Cl.5: **C08J 3/16**, C08L 25/02,
C08L 33/12, C08L 33/20

(54) **Mischungen thermoplastischer Polymerisate in Pulverform.**

(30) Priorität: **21.04.88 DE 3813363**

(43) Veröffentlichungstag der Anmeldung:
**25.10.89 Patentblatt 89/43**

(45) Bekanntmachung des Hinweises auf die
Patenterteilung:
**16.06.93 Patentblatt 93/24**

(84) Benannte Vertragsstaaten:
**DE ES FR GB IT NL**

(56) Entgegenhaltungen:
**EP-A- 0 121 854**
**EP-A- 0 121 855**

(73) Patentinhaber: **BAYER AG**

**W-5090 Leverkusen 1 Bayerwerk(DE)**

(72) Erfinder: **Piejko, Karl-Erwin, Dr.**
**Unterscheider Weg 7a**
**W-5060 Bergisch Gladbach 2(DE)**
Erfinder: **Lindner, Christian, Dr.**
**Riehler Strasse 200**
**W-5000 Köln 60(DE)**
Erfinder: **Koch, Otto, Dr.**
**Haferkamp 3**
**W-5000 Köln 80(DE)**

EP 0 338 360 B1

**Beschreibung**

Die Erfindung betrifft ein Verfahren zur Herstellung von Mischungen thermoplastischer Polymerisate in Pulverform aus wäßrigen Emulsionen der Polymerisate. Das Verfahren ist technisch besonders einfach und liefert pulverförmige Gemische mit verminderten Staubanteilen, verbesserter Rieselfähigkeit und Lagerbeständigkeit. Damit ist auch die Weiterverarbeitung entscheidend erleichtert.

Mischungen von thermoplastischen Harzen (z.B. Copolymerisaten von Vinylverbindungen) und Pfropfpolymerisaten von Vinylverbindungen auf Kautschuke sowie Mischungen verschiedener Pfropfpolymerisate von Vinylverbindungen auf Kautschuke sind technisch wichtige thermoplastische Formmassen.

Viele dieser Harze und Pfropfpolymerisate müssen in wäßriger Emulsion erzeugt und daraus isoliert werden. Zur Herstellung von Formmassen, die Harze und Pfropfpolymerisate enthalten, kann man die Emulsionen der anfallenden Polymerisate vermischen und das Gemisch aufarbeiten. Die so gewonnene Polymerisatmischung - meist in Pulverform - besitzt vorteilhafte Eigenschaften für die Verarbeitung.

Für Mischungen in Pulverform sind die Pulvereigenschaften von Wichtigkeit: Beispielsweise ist häufig Staubfreiheit gefordert, die Korngrößenverteilung soll bestimmten Anforderungen angepaßt sein, die Pulver sollen nicht zum Zusammenbacken und Verklumpen neigen.

Man kann durch besondere - stufenweise - Koagulation ("Gradientenkoagulation") d.h. durch bestimmte aufeinander folgende Koagulationsschritte, die Pulvereigenschaften der Pulvermischung in gewissem Umfang beeinflussen.

In EP-A-121 855, GB-A-1 113 348 und GB-A-1 568 469 werden Mischungen aus weichen und harten Polymerkomponenten in Pulverform so hergestellt, daß man durch "verzögerte" Koagulation des harten Polymeren eine Art Umhüllung der zum Zusammenkleben neigenden weichen Polymeranteile erreicht. In der EP-A-121 854 ist die Bildung von grobteiligem Pulver aus feinteiligem harten Polymer mittels weicher Polymere in einer "Gradientenkoagulation" beschrieben.

Diese Verfahren sind technisch aufwendig und nur in besonderen Koagulationsanlagen mit entsprechender technischer Ausrüstung durchführbar.

Es wurde gefunden, daß man bei der Co-Koagulation wäßriger Emulsionen bestimmter Polymerisate reproduzierbar und ohne aufwendige Meß- und Regeltechnik einwandfreie pulverförmige Mischungen erhält, wenn man die Emulsionen gleichzeitig, aber getrennt koaguliert und sofort nach der Koagulation vermischt.

Gegenstand der Erfindung ist somit ein Verfahren zur Herstellung von Mischungen thermoplastischer Polymerisate in Pulverform aus wäßrigen Emulsionen von

a) einem thermoplastischen Harz, das ein Homo- oder Copolymerisat von Styrol, $\alpha$-Methylstyrol, Methylmethacrylat oder Acrylnitril darstellt und gegebenenfalls bis zu 30 Gew.-% eines Kautschuks enthält, und

b) einem kautschukreichen Pfropfpolymerisat von Styrol, $\alpha$-Methylstyrol, Acrylnitril, Methylmethacrylat und/oder Alkylacrylat auf einen Dien- oder Alkylacrylatkautschuk mit einem Kautschukgehalt von 50-90 Gew.-%,

das dadurch gekennzeichnet ist, daß man wäßrige Emulsionen von a) und b) mit Polymerisatgehalten von 15 bis 50 Gew.-% bei 50 bis 100°C gleichzeitig, aber in separaten Mengenströmen, kontinuierlich oder halbkontinuierlich mit einer Koagulationslösung unter Koagulation der Polymerisate a) und b) vermischt, die Mengenströme vereinigt und dann das Polymerisatgemisch abtrennt.

Bevorzugt können Mischungen aus 50-95 Gew.-%, vorzugsweise 60-85 Gew.-% der Komponente a) und 5-50 Gew.-%, vorzugsweise 15-40 Gew.-% der Komponente b) hergestellt werden.

Die Komponenten a) und b) der erfindungsgemäß hergestellten Mischung sind bekannt.

Komponente a) sind thermoplastische Harze, d.h. Homo-oder Copolymerisate von Styrol, $\alpha$-Methylstyrol, Methylmethacrylat oder Acrylnitril; besonders geeignet sind Copolymerisate von Styrol und Acrylnitril, von $\alpha$-Methylstyrol und Acrylnitril, von Styrol, $\alpha$-Methylstyrol und Acrylnitril, von Methylmethacrylat und Styrol, von Methylmethacrylat und Acrylnitril sowie Polymethylmethacrylat. Besonders geeignete Harze im Sinne der Erfindung enthalten wenigstens 50 Gew.-% Styrol oder $\alpha$-Methylstyrol. Komponente a) schließt auch solche Harze ein, die eine geringe Menge eines Kautschuk einpolymerisiert oder eingemischt enthalten; geeignete Kautschuke sind bekannte teilchenförmige, teilvernetzte Dienkautschuke oder Alkylacrylatkautschuke; die harzbildenden Monomere können auf den Kautschuk pfropfpolymerisiert sein, oder es kann eine Mischung aus Kautschuk und Harz vorliegen.

Auf jeden Fall darf der Kautschukgehalt der Komponente a) 30 Gew.-% nicht überschreiten, bevorzugt sind Kautschukgehalte bis 10 Gew.-%.

Die Komponente b) des erfindungsgemäßen Verfahrens stellt ein kautschukreiches Pfropfpolymerisat von Vinylverbindungen auf einen teilvernetzten, teilchenförmigen Kautschuk mit mittleren Teilchendurchmessern ($d_{50}$) von 0,05-1 $\mu$m dar; pfropfpolymerisierte Vinylverbindungen sind Styrol, $\alpha$-Methylstyrol,

2

Acrylnitril, Methylmethacrylat und Alkylacrylat oder deren Mischungen; besonders bevorzugt sind Methylmethacrylat sowie Mischungen von Styrol und Acrylnitril, von α-Methylstyrol und Acrylnitril, von Methylmethacrylat und Styrol, von Methylmethacrylat und Alkylacrylat, von α-Methylstyrol, Methylmethacrylat und Acrylnitril. Als Kautschuke der Komponenten b) (Pfropfgrundlagen) kommen Dienhomo-und -Copolymerisate z.B. von Butadien, Isopren, Chloropren, gegebenenfalls mit bis zu 35 Gew.-% Comonomeren wie Styrol, Acrylnitril, Methylmethacrylat, Alkylacrylat, Vinylmethylether in Betracht oder Alkylacrylat-Polymerisate (insbesondere von $C_1$-$C_8$-Alkylacrylaten), die gegebenenalls bis zu 20 Gew.-% Vinylmonomere, wie Styrol, Acrylnitril, Vinylacetat, $C_1$-$C_8$-Alkylmethacrylat einpolymerisiert enthalten; die Acrylatkautschuke sind meist durch Einpolymerisieren polyfunktioneller Vinyl-oder Allylmonomere partiell vernetzt; vernetzende Monomere sind z.B. Bis-Acrylate, Bis-Acrylamide, Butadien, Acrylsäurevinylester, Triallylcyanurat, Trialkylisocyanurat, Zitronensäuretrisallylester, Bis-Carbonsäurevinylester.

Die Acrylatkautschuke enthalten die vernetzenden Monomere in Mengen bis maximal 5 Gew.-%. Die Kautschuke der Komponente b) können auch Kern/Mantel-Struktur besitzen, d.h. die Acrylatkautschukpartikel enthalten einen Kautschukkern, der sich strukturell von dem ihn umgebenden Acrylatkautschuk unterscheidet, oder einen harten Thermoplastharzkern.

Die Komponente b) enthält im allgemeinen 50-90 Gew.-% Kautschuk, bevorzugt 60-85 Gew.-%.

Die Komponenten a) und b) können in bekannter Weise durch Emulsionspolymerisation in wäßrigen Medien bzw. Emulsionspfropfpolymerisation in Gegenwart von Kautschuklatices hergestellt werden. Im Falle von kautschukfreien Polymerisaten a) werden die Monomere bei pH-Werten von ca. 12 bis 2, insbesondere von 10 bis 3, radikalisch in Gegenwart von Seifen (Emulgatoren) in wäßrigem Medium polymerisiert. Als Initiatoren kommen insbesondere wasserlösliche Radikalbildner wie Peroxodisulfate, Peroxodiphosphate, wasserlösliche Hydroperoxide und Peroxosäuren in Betracht, sowie Redoxinitiatorsysteme. Die Polymerisation, die normalerweise bei 40-90 °C durchgeführt wird, erfordert die Anwesenheit eines ionischen Emulgators, insbesondere eines anionischen Emulgators, in Mengen bis zu 4 Gew.-%, bevorzugt bis zu 2 Gew.-%, bezogen auf die Monomere. Geeignete Emulgatoren sind beispielsweise Fettsäuresalze, Alkylsulfonsäuresalze mit längerkettigen Alkylresten und Schwefelsäurealkylhalbester mit längerkettigen Alkylresten.

Zur Herstellung von Pfropfpolymerisaten auf Kautschuke können die zu pfropfenden Monomere in Gegenwart einer wäßrigen Kautschukemulsion ähnlich wie oben beschrieben polymerisiert werden.

Für das erfindungsgemäße Verfahren werden wäßrige Emulsionen a) und b) eingesetzt mit Polymerfeststoffgehalten von 15-50 Gew.-%, vorzugsweise von 20-40 Gew.-%; besonsonders günstig sind zur Durchführung des erfindungsgemäßen Verfahrens Emulsionen von a) und b) mit etwa gleichem Polymerfeststoffgehalt, bevorzugt ca. 30-40 Gew.-% einzusetzen.

Das erfindungsgemäße Verfahren kann wie folgt durchgeführt werden:

In einen kontinuierlichen oder diskontinuierlichen Prozeß in einem oder in mehreren, hintereinander geschalteten Reaktoren werden die Latices der Komponenten a) und b) unter Rühren getrennt eingespeist. Im Reaktor befindet sich eine wäßrige Koagulationslösung. "Getrennt eingespeist" bedeutet, daß die beiden Emulsionen so in den Reaktor eingegeben werden, daß sie ohne sich zu vermischen in die Koagulationslösung gelangen. Dies läßt sich dadurch erreichen, daß man die Emulsionen über getrennte Einspeisevorrichtungen an verschiedenen Stellen des Reaktors eindosiert. Man arbeitet bevorzugt bei 50 bis 100 °C, insbesondere bei 70 bis 95 °C. Als Koagulationslösung verwendet man wäßrige Lösungen von wasserlöslichen anorganischen oder organischen Säuren und/oder Salzen, wie Salzsäure, Schwefelsäure, Phosphorsäure, Ameisensäure, Essigsäure, Propionsäure, Alkali- und Erdalkali-Chloride,-sulfate, -formiate, -acetate, -phosphate. Im allgemeinen benutzt man 0,5-15 Gew.-%ige wäßrige Lösungen, je nach zu koagulierender Latexmischung. Koagulationslösung, Emulsion von a) und Emulsion von b) müssen bei der angegebenen Temperatur intensiv vermischt werden.

Arbeitet man in mehreren, hintereinander geschalteten Reaktoren, so dosiert man beide Emulsionen vorteilhaft in den ersten Reaktor; in den weiteren Reaktoren kann der bei der Koagulation gebildete Polymerisatbrei in Wasser bei den gleichen Temperaturen wie im ersten Reaktor oder auch bei höhren Temperaturen nachbehandelt werden. Durch diese Nachbehandlung kann man die Kornstruktur der Polymerisatpulver und die Teilchengrößenverteilung verbessern. Das erfindungsgemäße Verfahren benötigt Verweilzeiten von 15 Minuten bis 5 Stunden, bevorzugt von 1 Stunde bis 3 Stunden.

Der primär gebildete Polymerisatbrei kann in üblicher Weise z.B. durch Filtrieren oder Schleudern abgetrennt und dann gewaschen und getrocknet werden.

Dabei werden pulverförmige Polymerisatmischungen mit verbesserter Korngrößenverteilung erhalten, die sich beispielsweise durch besondere Staubarmut, Rieselfähigkeit und thermoplastische Verarbeitbarkeit bemerkbar macht. Da die Polymerisatmischungen als Zusätze zu bekannten thermoplastischen Kunststoffen wie Polyvinylchlorid und ABS verwendet werden, um deren Eigenschaften z.B. Kerbschlagzähigkeit und Wärmestandfestigkeit zu verbessern, ist es entscheidend, daß sich das Pulver gut in kontinuierlich arbeitende Verarbeitungsvorrichtungen für Thermoplaste einspeisen läßt, sich mit der Schmelze des thermoplastischen Kunststoffs bei hohen Temperaturen vermischt und darin gleichmäßig verteilt oder löst. Die erfindungsgemäßen Produkte besitzen diese Eigenschaften.

Durch die Staubarmut der pulverförmigen Polymerisatmischungen ist ihre Handhabung vereinfacht.

Beispiele

I)
Kautschuklatex als Pfropfgrundlage:

n-Butylacrylat-Kautschuklatex, teilvernetzt mit Triallylcyanurat; Polymerisatgehalt 37 Gew.-%. Mittlerer Durchmesser des Latexteilchen 0,5 $\mu$m ($d_{50}$-Wert); Gelgehalt 90 Gew.-% (ermittelt in Dimethylformamid bei 23°C).

II)
Polymerisatemulsionen

II.1)
Komponente a): Herstellung der Copolymerisatemulsion

In einem Reaktor werden 1715 Gew.-Teile Wasser, 4 Gew.-Teile Na-Salz der disproportionierten Abietinsäure, 3 Gew.-Teile 1 n-Natronlauge und 80 Gew.-Teile der unten angegebenen Monomermischung vorgelegt. Bei 80°C startet man die Polymerisation durch Zugabe von 4 Gew.-Teilen Kaliumperoxodisulfat in 140 Gew.-Teilen Wasser. Danach wird der Rest der Monomermischung sowie die unten beschriebene Zulauflösung gleichzeitig innerhalb von 6 Stunden zudosiert. Danach rührt man bei 80°C 4 Stunden zur Auspolymerisation nach.

```
Monomermischung:  Acrylnitril              434    Gew.-Teile

                  α-Methylstyrol           966    Gew.-Teile

                  tert.-Dodecylmercaptan   3,5 Gew.-Teile


Zulauflösung:     Wasser                   860    Gew.-Teile

                  Na-Salz der dispro-      20     Gew.-Teile

                  portionierten Abietin-

                  säure

                  1 n-Natronlauge          18     Gew.-Teile
```

Es wird ein 33 Gew.-%iger Latex des Polymerisats erhalten.

II.2)
Komponente b): Herstellung der Pfropfpolymerisatemulsion

II.2.1)

In einem Reaktor werden vorgelegt:
5892 Gew.-Teile des Kautschuk-Latex gemäß I)
96 Gew.-Teile Wasser
Bei 70°C gibt ma eine Lösung von 3,75 Gew.-Teilen Kaliumperoxodisulfat in 135 Gew.-Teilen Wasser hinzu. Danach fügt man innerhalb von 4 Stunden die Zuläufe 1 und 2 unter Rühren zu:

4

```
Zulauf 1: Methylmethacrylat          439  Gew.-Teile

          n-Butylacrylat              68  Gew.-Teile


Zulauf 2: Wasser                     714  Gew.-Teile

          Na-Salz von C14-C18-       8,5 Gew.-Teile

          Alkylsulfonsäuren
```

Anschließend läßt man 3 Stunden auspolymerisieren. Es wird ein 37 Gew.-%iger Latex des Pfropfpolymerisats erhalten.

II.2.2)

In einem Reaktor werden vorgelegt:
4722 Gew.-Teile des Kautschuk-Latex gemäß I)
865 Gew.-Teile Wasser

Bei 70°C gibt man eine Lösung von 6 Gew.-Teile Kaliumperoxodisulfat in 200 Gew.-Teilen Wasser hinzu. Danach fügt man innerhalb von 5 Stunden die Zuläufe 1 und 2 unter Rühren zu:

```
Zulauf 1: Styrol                     832  Gew.-Teile

          Acrylnitril                323  Gew.-Teile



Zulauf 2: Wasser                    1450  Gew.-Teile

          Na-Salz von C14-C18-        25  Gew.-Teile

          Alkylsulfonsäuren
```

Anschließend läßt man 4 Stunden auspolymerisieren. Es wird ein 34 Gew.-%iger Latex des Pfropfpolymerisats erhalten.

III)
Koagulation zu pulverförmigen Polymerisatmischungen

Die folgenden Versuche zur Koagulation und Isolierung werden mit insgesamt 1000 Gew.-Teilen Polymerisat durchgeführt. Koagulationsmittel ist eine Lösung aus 5000 Gew.-Teilen Wasser, 100 Gew.-Teilen Magnesiumsulfat und 100 Gew.-Teilen Essigsäure. Koaguliert wird bei 90°C.

III.1)
Erfindungsgemäßes Verfahren

In das auf 90°C erhitzte Koagulationsmittel wird unter Rühren die Emulsion von Polymer a) und von Polymer b), gemäß Tabelle 1 über separate Zulaufeinrichtungen innerhalb von 1/2 Stunde eindosiert und danach 1/2 Stunde bei 90°C nachgerührt.

T a b e l l e   1

| Versuch | Gew.-Teile Polymer a) in der Emulsion | Gew.-Teile Polymer b) in der Emulsion |
|---|---|---|
| III.1.1) | 800 (Emulsion II.1) | 200 (Emulsion II.2.1) |
| III.1.2) | 730 (Emulsion II.1) | 270 (Emulsion II.2.2) |

III.2)
Vergleich "Mischverfahren"

Versuch III.1.1 wird wiederholt aber die Emulsionen gemäß Tabelle 1 vor der Koagulation miteinander vermischt. Die Emulsionsmischung wird in das Koagulationsmittel eindosiert. Temperatur, Zulaufzeiten, Nachrührzeiten und sowie Mengen sind wie in Versuch III.1.

III.3)
Vergleich "Stufenverfahren"

Versuch III.1.1 wird wiederholt aber die Emulsionen II.1 und II.2.1 nacheinander in das Koagulationsmittel gebracht: Die Emulsion II.1 wird in 1/2 Stunde eindosiert. Danach wird 1/4 Stunde bei 90°C nachgerührt. Anschließend fügt man innerhalb von 1/2 Stunde bei 90°C die Emulsion II.2.1 zu. Man heizt 1/2 Stunde bei 90°C nach.

Zur weiteren Aufarbeitung der nach III.1), III.2) und III.3) hergestellten Polymerisataufschlämmungen werden diese filtriert und mit Wasser praktisch elektrolytfrei gewaschen. Das gewonnene Festprodukt wird bei ca. 75°C in einem Wirbelschichttrockner auf eine Restfeuchte von kleiner 0,8 Gew.-% getrocknet.

IV)
Eigenschaften der pulverförmigen Polymerisatmischungen

IV.1
Staubanteil:

Als Maß für den Staubanteil dient die Schwächung eines durch einen Behälter gehenden Lichtstrahls, die durch das Aufwirbeln von Staub in diesem Behälter hervorgerufen wird. Der Staub wird durch das Herabfallen von Polymerisat-Pulver unter standardisierten Bedingungen (d.h. Herabfallen einer bestimmten Menge aus einer durch die Apparatur vorgegebenen Höhe) aufgewirbelt. Die Lichtschwächung wird sofort nach dem Aufprall des Pulvers auf den Boden des Behälters und 30 sec. später gemessen. (Die Prüfung erfolgt mit 30 g Pulver in einem modifizierten Staubmeßgerät der Fa. Cassela).

6

Die "Staubwerte" sind in Tabelle 2 wiedergegeben:

**Tabelle 2**

| Pulverzusammensetzung | Verfahren | "Staubwert" (% Lichtschwächung) | |
|---|---|---|---|
| | | nach 2 sec. | nach 30 sec. |
| III.1.1 Tabelle 1 | erfindungsgemäß (III.1.1) | 10 | 1 |
| | Vergleich (III.2) | 37 | 7 |
| | Vergleich (III.3) | 36 | 6 |
| III.1.2 Tabelle 1 | erfindungsgemäß (III.1.2) | 12 | 2 |
| | Vergleich (III.2) | 30 | 6 |

IV.2
Schüttgewichte

Tabelle 3 gibt das Gewicht von 1 Liter pulverförmiger Polymerisatmischung an. (Schüttgewicht)

## T a b e l l e   3

| Pulverzusammen-setzung gemäß | Verfahren | Schüttgewicht [g/l] |
|---|---|---|
| III.1.1 Tabelle 1 | III.1.1 | 450 |
| | III.2 | 330 |
| | III.3 | 380 |

Wie aus den Tabellen 2 und 3 ersichtlich, wird durch das erfindungsgemäße Verfahren der Staubanteil der Pulver vermindert und das Schüttgewicht erhöht.

**Patentansprüche**

1. Verfahren zur Herstellung von Mischungen thermoplastischer Polymerisate in Pulverform aus wäßrigen Emulsionen von
   a) einem thermoplastischen Harz, das ein Homo-oder Copolymerisat von Styrol, α-Methylstyrol, Methylmethacrylat oder Acrylnitril darstellt und gegebenenfalls bis zu 30 Gew.-% eines Kautschuks enthält und
   b) einem kautschukreichen Pfropfpolymerisat von Styrol, α-Methylstyrol, Acrylnitril, Methylmethacrylat und/oder Alkylacrylat auf einen Dien-oder Alkylacrylatkautschuk mit einem Kautschukgehalt von 50-90 Gew.-%,
   dadurch gekennzeichnet, daß man wäßrige Emulsionen von a) und b) mit Polymerisatgehalten von 15 bis 50 Gew.-% bei 50 bis 100°C gleichzeitig, aber in separaten Mengenströmen, kontinuierlich oder halbkontinuierlich mit einer Koagulationslösung unter Koagulation der Polymerisate a) und b) vermischt, die Mengenströme vereinigt und dann das Polymerisatgemisch abtrennt.

2. Verfahren gemäß Anspruch 1, dadurch gekennzeichnet, daß man 50-95 Gew.-% der Komponente a) und 5-50 Gew.-% der Komponente b) mischt.

**Claims**

1. A process for the production of mixtures of thermoplastic polymers in powder form from aqueous emulsions of
   a) a thermoplastic resin in the form of a homopolymer or copolymer of styrene, α-methyl styrene, methyl methacrylate or acrylonitrile optionally containing up to 30% by weight of a rubber and
   b) a rubber-rich graft polymer of styrene, α-methyl styrene, acrylonitrile, methyl methacrylate and/or alkyl acrylate on a diene or alkyl acrylate rubber having a rubber content of 50 to 90% by weight,
   characterized in that aqueous emulsions of a) and b) having polymer contents of 15 to 50% by weight are continuously or semicontinuously mixed in separate product streams, but at the same time, with a coagulation solution at 50 to 100°C with coagulation of the polymers a) and b), the product streams are combined and the polymer mixture is then separated off.

2. A process as claimed in claims 1, characterized in that 50 to 95% by weight of component a) add 5 to 50 % by weight of component b) are mixed.

**Revendications**

1. Procédé pour la préparation de compositions de polymères thermoplastiques sous forme de poudre à partir d'émulsions aqueuses de :

   a) une résine thermoplastique qui est un homo- ou copolymère de styrène, d'α-méthylstyrène, de méthacrylate de méthyle ou d'acrylonitrile et, le cas échéant, contient jusqu'à 30 % en poids d'un caoutchouc et

   b) un polymère greffé, riche en caoutchouc, de styrène, d'α-méthylstyrène, d'acrylonitrile, de méthacrylate de méthyle et/ou d'acrylate d'alkyle sur un caoutchouc d'acrylate d'alkyle ou diénique avec une teneur en caoutchouc de 50 à 90 % en poids,

   caractérisé en ce que l'on mélange les émulsions aqueuses de a) et b) ayant des teneurs en polymère de 15 à 50 % en poids à une température comprise entre 50 et 100°C, simultanément, mais à flux massiques séparés, en continu ou en semi-continu avec une solution de coagulation avec coagulation des polymères a) et b), on réunit les flux massiques et ensuite on sépare le mélange de polymères.

2. Procédé selon la revendication 1, caractérisé en ce que l'on mélange de 50 à 95 % en poids du constituant a) avec 5 à 50 % en poids du constituant b).